# EUROPÄISCHE PATENTANMELDUNG

(11) **EP 0 984 137 A2**
(43) Veröffentlichungstag der Anmeldung: **08.03.2000**
(21) Anmeldenummer: 99810711.4
(22) Anmeldetag: 09.08.1999
(51) Int. Cl.: F01D 3/04, F02C 6/12

(54) **Verfahren und Vorrichtung zur Schubentlastung eines Turboladers**

(30) Priorität: 03.09.1998 DE 19840098
(71) Anmelder: Asea Brown Boveri AG, 5401 Baden (CH)
(72) Erfinder: Loos, Markus, 5400 Baden (CH); Lichtner, Frank, 5400 Baden (CH)
(74) Vertreter: Liebe, Rainer

(57) **Zusammenfassung**

Aufgabe der Erfindung ist es, das Teillast- und Leerlaufverhalten eines mit einer Vorrichtung zur Schubentlastung ausgestatteten Turboladers zu verbessern. Dazu sollen sowohl ein Verfahren als auch eine Vorrichtung angegeben werden.

Erfindungsgemäss wird dies dadurch erreicht, dass diese Verbindung eines Hochdruckbereiches (16, 61) des Turboladers (1) mit einem Bereich (21, 29) des Turboladers (1), welcher einen geringeren Druck als der Hochdruckbereich (16, 61) aufweist, bei Vollast des Turboladers (1) vollständig geöffnet, bei Teillast zumindest nahezu und im Leerlauf vollständig geschlossen wird. Dazu ist die als ein Entlüftungskanal (22) ausgebildete Vorrichtung zur Schubentlastung mit einem Schliesselement (30, 41, 46) versehen.

## Beschreibung

### Technisches Gebiet

Die Erfindung betrifft ein Verfahren und eine Vorrichtung zur Schubentlastung eines Turboladers gemäss dem Oberbegriff der Ansprüche 1 bzw. 5.

### Stand der Technik

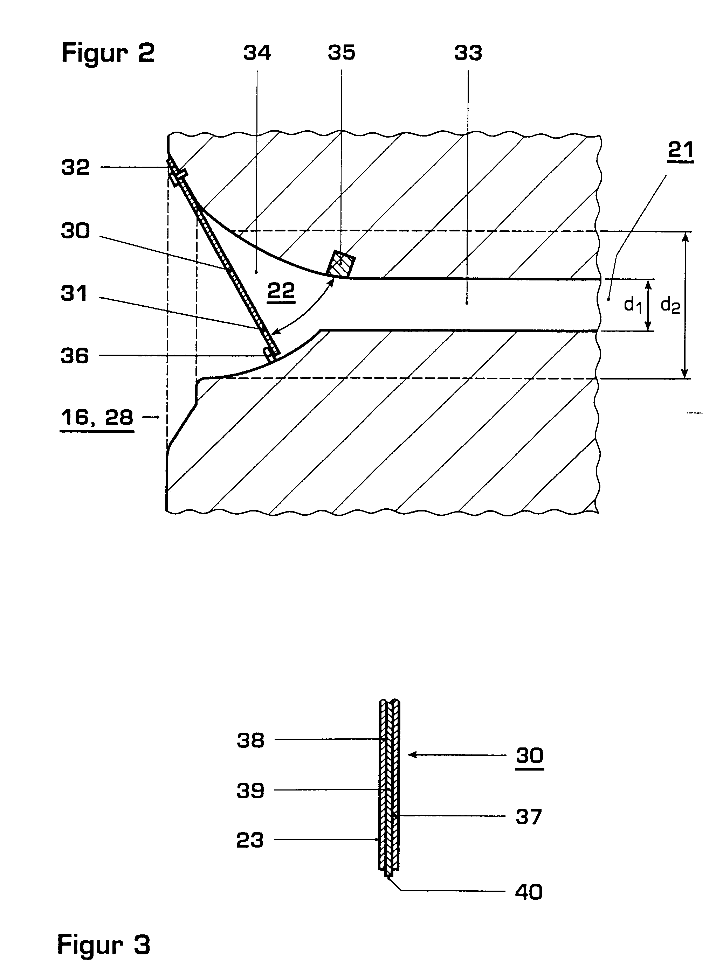

Turbolader für Grossdieselmotoren werden heute hauptsächlich mit Axialturbinen und mit Radialverdichtern ausgestattet. Dabei erfolgt die Zuströmung zu den beiden Laufrädern axial von den beiden Stirnseiten. Diese Anordnung führt dazu, dass die Axialschübe von Verdichter und Turbine in die gleiche Richtung wirken. Demnach kann der auf die Lager wirkende Gesamtschub sehr gross werden. Um deren Belastung zu reduzieren, werden Massnahmen zur Schubentlastung eingeführt. Eine häufig angewandte Methode ist die Reduktion des Druckes an der Verdichterradrückwand, d.h. in einem Hochdruckbereich des Turboladers. Der Rückraum des Verdichterrades ist dazu über einen im Gehäuse des Turboladers angeordnete Kanal mit einem Bereich des Turboladers verbunden, welcher einen geringeren Druck als der Hochdruckbereich aufweist. Auf diese Weise findet beim Betrieb des Turboladers eine Entlüftung des Hochdruckbereiches und somit eine deutliche Senkung des Luftdruckes im Rückraum des Verdichterrades statt, wodurch der auf die Lager wirkende Gesamtschub reduziert wird. Dabei kann der Bereich geringeren Druckes der Turbinenaustritt (Abgasdruck) oder auch der den Turbolader umgebende Aussenraum (Luftdruck) sein. Am Aussendurchmesser des Verdichterrades sorgt eine berührungsfreie Dichtung dafür, dass der Leckageluftstrom vom Austritt in den Rückraum des Verdichterrades trotz des hohen Druckgefälles begrenzt wird (Vortrag von M. Imakiire et al "An Outline Review of MET Turbocharger Design Features and Improvements Achieved for User-Friendliness" auf dem 2. Internationalen Symposium "Marine Propulsion Systems, Design and Operation" Evgenidion Foundation, Athen, 19.-20.06.1997, S. 3 und Fig. 2, unten).

Alternativ dazu sind auch Lösungen zur Schubentlastung bekannt, bei denen der stromauf der Turbine befindliche Hochdruckbereich mit einem stromab der Turbine ausgebildeten Bereich geringeren Druckes oder auch mit dem den Turbolader umgebenden Aussenraum verbunden ist (ebenda, Fig. 2, Mitte unten).

Eine solche Lösung weist jedoch in allen Betriebszuständen einen Leckagemassenstrom auf. Daraus resultiert ein volumetrischer Verlust von bis zu 1,5 %, was einen um etwa 1 % verringerten Wirkungsgrad des Turboladers zur Folge hat. Bei hoher Leistung des mit dem Turbolader verbundenen Motors und den damit verbundenen hohen Verdichterdruckverhältnissen wird ein solcher, durch die Schubentlastung verursachter Verlust bewusst in Kauf genommen. Weil jedoch bei Teillast keine Schubentlastung erforderlich ist, verschlechtert der entstehende volumetrische Verlust in dieser Situation unnötigerweise den Wirkungsgrad des Turboladers.

Bei sehr tiefen Drehzahlen des Turboladers und der damit verbundenen geringen Fördermenge kann zudem der Motor beim Leerlaufbetrieb als Saugmotor arbeiten, d.h. die Luft wird durch den Verdichterkanal angesaugt. Dadurch entsteht am Austritt des Verdichterrades ein Unterdruck, welcher zum Rückströmen von Abgasen aus dem Turbinenaustritt über den Rückraum des Verdichterrades in den Verdichterkanal führen kann. Wegen der damit verbundenen möglichen Aufheizung des temperaturempfindlichen, aus Aluminium gefertigten Verdichterrades ist auch ein solches Rückströmen äusserst unerwünscht.

Die beschriebenen Nachteile können natürlich nicht nur bei mit Axialturbinen ausgestatteten Turboladern, sondern auch bei solchen mit Radialturbinen auftreten.

### Darstellung der Erfindung

Die Erfindung versucht alle diese Nachteile zu vermeiden. Ihr liegt die Aufgabe zugrunde, das Teillast- und Leerlaufverhalten eines mit einer Vorrichtung zur Schubentlastung ausgestatteten Turboladers zu verbessern. Dazu sollen sowohl ein Verfahren als auch eine Vorrichtung angegeben werden.

Erfindungsgemäss wird dies dadurch erreicht, dass bei einem Verfahren gemäss dem Oberbegriff des Anspruchs 1, die Verbindung des Radrückraumes mit dem Bereich geringeren Druckes bei Vollast des Turboladers vollständig geöffnet, bei Teillast zumindest nahezu und im Leerlauf vollständig geschlossen wird. Dazu ist die Vorrichtung zur Schubentlastung mit einem Schliesselement versehen, welches in Abhängigkeit vom im Hochdruckbereich herrschenden Druck selbsttätig oder auch fremdbetätigt öffnet bzw. schliesst.

Die Vorrichtung zur Schubentlastung ist besonders vorteilhaft als ein zumindest teilweise in einem Gehäuse des Turboladers angeordneter Entlüftungskanal ausgebildet und das Schliesselement im Bereich dieses Entlüftungskanals vorgesehen. Dabei kann der Entlüftungskanal zwischen einem stromauf der Turbine befindliche Hochdruckbereich und einem stromab der Turbine ausgebildeten Bereich geringeren Druckes oder zwischen einem stromab des Radialverdichters befindlichen Radrückraum und einem einen geringeren Druck als der Radrückraum aufweisenden Bereich des Turboladers angeordnet sein. Die Temperaturbeständigkeit des Schliesselementes bei einem im Bereich der Turbine angeordneten Entlüftungskanal soll zumindest 700°C und im Bereich des Radialverdichters zumindest 200 °C betragen. Dadurch kann das Schliesselement auch die bei Vollast herrschenden Betriebstemperaturen über längere Zeit unbeschadet überstehen, so dass eine höhere Standzeit dieses Bauteiles gewährleistet ist.

Indem der im Hochdruckbereich des Turboladers herrschende Druck auf das Schliesselement einwirkt und dieses vollständig öffnet ist die Schubentlastung bei Vollast gewährleistet. Dagegen geht der Druck im Hochdruckbereich bei Teillast und im Leerlauf des Turboladers deutlich zurück, so dass das Schliesselement den Entlüftungskanal zumindest nahezu bzw. vollständig verschliesst. Auf diese Weise kann der volumetrische Verlust bei Teillast reduziert und somit der Wirkungsgrad des Turboladers erhöht werden. Im Leerlauf, bei dem es zu einem vollständigen Verschliessen des Entlüftungskanals kommt, kann das schädliche Rückströmen von Abgasen vom Turbinenaustritt in den Radrückraum abgestellt werden. Trotz vorhandener Vorrichtung zur Schubentlastung kann so das Teillast- und Leerlaufverhalten des Turboladers verbessert werden.

Weitere vorteilhafte Ausgestaltungen der Erfindung ergeben sich aus den Unteransprüchen.

### Kurze Beschreibung der Zeichnung

In der Zeichnung sind mehrere Ausführungsbeispiele der Erfindung anhand eines mit einem Radialverdichter und einer Axialturbine ausgestatteten Turboladers dargestellt.

Es zeigen:
- Fig. 1: einen Teillängsschnitt eines mit einer Vorrichtung zur Schubentlastung versehenen Turboladers des Standes der Technik;
- Fig. 2: einen vergrösserten Ausschnitt aus Fig. 1, mit einem erfindungsgemässen Schliesselement, in einem ersten Ausführungsbeispiel;
- Fig. 3: einen Teilquerschnitt durch das in Fig. 1 dargestellte Schliesselement, in einer Weiterbildung des ersten Ausführungsbeispiels;
- Fig. 4: einen vergrösserten Ausschnitt aus Fig. 1, mit einem erfindungsgemässen Schliesselement, in einem zweiten Ausführungsbeispiel;
- Fig. 5: einen vergrösserten Ausschnitt aus Fig. 1, mit einem nur schematisch dargestellten Schliesselement, in einem dritten Ausführungsbeispiel;
- Fig. 6: das Lagergehäuse gemäss Fig. 1, mit einem erfindungsgemäss angeordneten Schliesselement, in einem weiteren Ausführungsbeispiel;
- Fig. 7: das Lagergehäuse gemäss Fig. 1, mit einem erfindungsgemäss angeordneten Schliesselement, in einem nächsten Ausführungsbeispiel;
- Fig. 8: einen vergrösserten Ausschnitt aus Fig. 1, mit einem erfindungsgemässen Schliesselement, in einem weiteren Ausführungsbeispiel.

Es sind nur die für das Verständnis der Erfindung wesentlichen Elemente gezeigt. Nicht dargestellt ist von der Anlage beispielsweise die mit dem Turbolader verbundene Brennkraftmaschine. Die Strömungsrichtung der Arbeitsmittel ist mit Pfeilen bezeichnet.

### Weg zur Ausführung der Erfindung

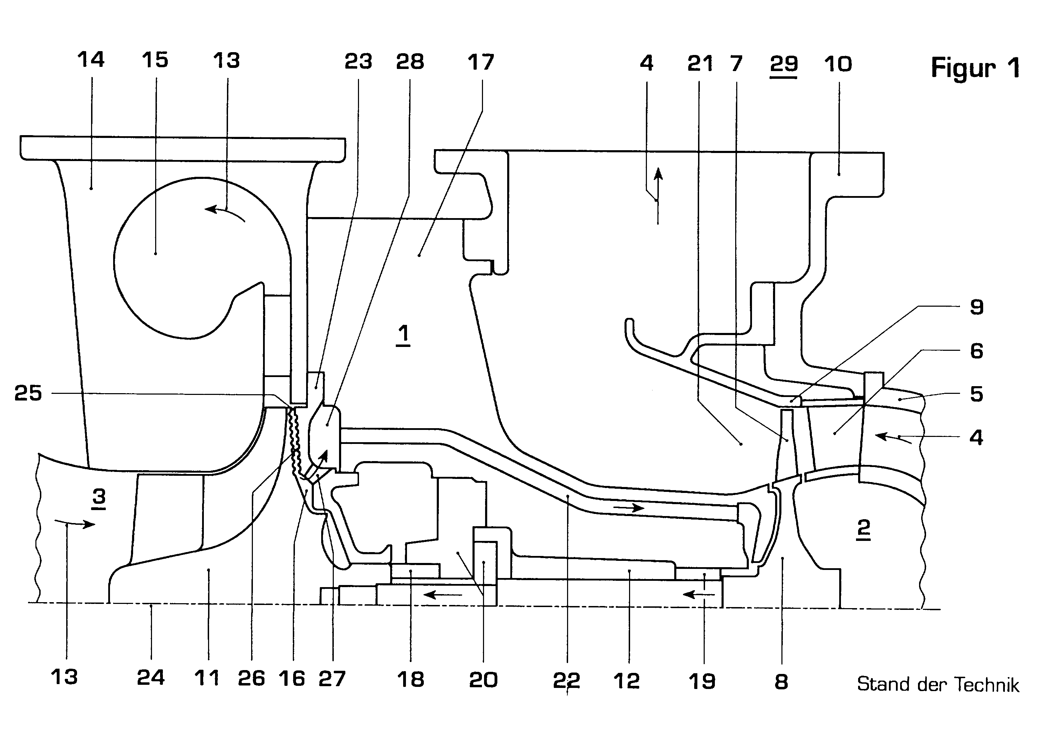

In Fig. 1 ist ein Turbolader 1 des Standes der Technik mit einer axial angeströmten Turbine 2, einem Radialverdichter 3 und einer Innenlagerung dargestellt. Beim Betrieb der nicht dargestellten Brennkraftmaschine werden deren Abgase 4 über ein Gaseintrittgehäuse 5 in die Turbine 2 des Turboladers 1 eingeleitet. Das zugeführte Abgas 4 wird nach Durchströmen eines Düsenrings 6 in axialer Richtung gegen die Laufschaufeln 7 eines Turbinenrades 8 geführt und dabei entspannt. Die Laufschaufeln 7 werden von einem als Diffusor ausgebildeten Abdeckring 9 nach radial aussen begrenzt, welcher seinerseits an einem Gasaustrittgehäuse 10 der Turbine 2 befestigt ist. Das Turbinenrad 8 ist mit einem im Radialverdichter 3 vorgesehenen Verdichterrad 11 auf einer gemeinsamen Welle 12 angeordnet. Dadurch wird beim Durchströmen des Turbinenrades 8 gleichzeitig auch das Verdichterrad 11 angetrieben, so dass letzteres die zum Betreiben der Brennkraftmaschine erforderliche Luft 13 ansaugt und komprimiert. Die in den Laufschaufeln 7 des Turbinenrades 8 entspannten Abgase 4 werden durch das Gasaustrittgehäuse 10 der Turbine 2 nach aussen abgeführt, während die im Radialverdichter 3 komprimierte Luft 13 über in einem Verdichtergehäuse 14 angeordnete Kanäle 15 zur Brennkraftmaschine gelangt.

Stromab des Verdichterrades 11 ist ein Radrückraum 16 ausgebildet, welcher einen Hochdruckbereich des Turboladers 1 darstellt. Die Innenlagerung besteht aus zwei in einem Lagergehäuse 17 angeordneten Radiallagern 18, 19 sowie einer Axiallagerung 20. Zur Schubentlastung des Turboladers 1, d.h. zur Verringerung des auf die Axiallagerung 20 wirkenden Gesamtschubes (Schubkräfte mittels Pfeilen dargestellt), ist in einem als Lagergehäuse 17 ausgebildeten Gehäuse des Turboladers 1, zwischen dem Radrückraum 16 des Verdichterrades 11 und dem Turbinenaustritt 21 - als einem Bereich des Turboladers 1, welcher einen geringeren Druck aufweist, als der im Radrückraum 16 des Verdichterrades 11 herrschende Luftdruck - ein Entlüftungskanal 22 angeordnet.

Das Lagergehäuse 17 und das Verdichtergehäuse 14 sind mittels eines als Zwischenwand 23 ausgebildeten Stators voneinander getrennt. Zwischen dem im Betrieb rotierenden Verdichterrad 11 und der feststehenden Zwischenwand 23 ist ein vorwiegend radial zur Maschinenachse 24 angeordneter Trennspalt 25 ausgebildet. Letzterer nimmt eine Labyrinthdichtung 26 auf, welche den Leckageluftstrom trotz des hohen Druckgefälles begrenzt. Stromab der Labyrinthdichtung 26 kommuniziert der Trennspalt 25 mit dem Radrückraum 16, der über eine Ausnehmung 27 der Zwischenwand 23 mit einem Zwischenraum 28 und dieser wiederum mit dem Entlüftungskanal 22 verbunden ist.

Natürlich kann als Bereich geringeren Druckes auch ein Aussenraum 29 des Turboladers 1 verwendet werden. In diesem Fall ist der Entlüftungskanal 22 zwischen dem Radrückraum 16 und dem Aussenraum 29 ausgebildet (nicht dargestellt). Im ersten Fall wird damit der Abgasdruck der Turbine 2 und im zweiten Fall der Luftdruck ausserhalb des Turboladers 1 zur Schubentlastung genutzt.

In einem ersten Ausführungsbeispiel der Erfindung ist im Entlüftungskanal 22 ein plattenförmiges Schliesselement 30, mit einem freien Plattenende 31 sowie mit einem am Entlüftungskanal 22 befestigten Plattenende 32 angeordnet (Fig. 2), welches eine Temperaturbeständigkeit von zumindest 200°C besitzt. Bei einem solchen Schliesselement 30 können im Entlüftungskanal 22 relativ grosse Querschnitte erreicht werden, so dass die Verschmutzungsgefahr gering ist.

Das Schliesselement ist als eine den Entlüftungskanal 22 vollständig abdeckende Biegefeder 30 ausgebildet. Dazu weist der Entlüftungskanal 22 einen ersten Kanalteil 33 mit einem ersten Querschnitt d1 und verdichterseitig des ersten Kanalteils 33 einen zweiten Kanalteil 34 mit einem gegenüber dem ersten Querschnitt d1 vergrösserten zweiten Querschnitt d2 auf. Die Biegefeder 30 ist im zweiten Kanalteil 34 angeordnet und mit ihrem Plattenende 32 am zweiten Kanalteil 34 befestigt.

Bei Vollast des mit dem Turbolader 1 verbundenen Motors wirkt der im Hochdruckbereich (Radrückraum) 16 des Verdichterrades 11 herrschende Luftdruck auf die Biegefeder 30. Mit zunehmendem Luftdruck im Radrückraum 16 des Verdichterrades 11, respektive im Zwischenraum 28, biegt sich die Biegefeder 30 aufgrund der angreifenden Druckkräfte aus ihrer Ausgangsstellung in Richtung Turbinenaustritt 21 weg. Der Entlüftungskanal 22 wird somit selbsttätig geöffnet und die Schubentlastung gewährleistet. Dabei ist der Entlüftungskanal 22 so gestaltet, dass bei kleineren Einfederungen der ganze Querschnitt versperrt bleibt und erst ab einer bestimmten Auslenkung der Biegefeder 30 geöffnet wird. Je grösser die Druckdifferenz zwischen dem Radrückraum 16 und dem mit letzterem verbundenen Turbinenaustritt 21 ist, desto grösser ist die Öffnung des Querschnittes.

Dagegen geht der Luftdruck im Radrückraum 16 bei Teillast des Turboladers 1 deutlich zurück, so dass die Biegefeder 30 den Entlüftungskanal 22 zumindest nahezu bzw. vollständig verschliesst. Auf diese Weise wird der volumetrische Verlust bei Teillast reduziert und somit der Wirkungsgrad des Turboladers 1 erhöht. Im Leerlauf, bei dem es zu einem vollständigen Verschliessen des Entlüftungskanals 22 kommt, kann das schädliche Rückströmen von Abgasen vom Turbinenaustritt 21 in den Radrückraum 16 abgestellt werden. Trotz vorhandener Vorrichtung zur Schubentlastung wird so das Teillast- und Leerlaufverhalten des Turboladers 1 verbessert.

Um ein vollständiges Öffnen des Entlüftungskanals 22 zu erleichtern, ist im zweiten Kanalteil 34, turbinenseitig des freien Plattenendes 31 der Biegefeder 30, ein Permanentmagnet 35 angeordnet, der die Biegefeder 30 ab einer gewissen Stellung anzieht und damit den gesamten Entlüftungskanal 22 freigibt. Zudem ist im zweiten Kanalteil 34, verdichterseitig des freien Plattenendes 31, ein Anschlag 36 angeordnet, welcher ein Rückschlagen der Biegefeder 30 verhindert.

Die Biegefeder 29 weist zwei Deckschichten 37, 38 sowie eine Zwischenschicht 39 auf, wobei die Zwischenschicht 39 mit einer die Deckschichten 37, 38 am freien Plattenende 31 überragenden Dichtlippe 40 ausgestattet ist (Fig. 3). Beide Deckschichten 37, 38 bestehen aus metallischen Werkstoffen mit unterschiedlichen Wärmeausdehnungskoeffizienten, wobei die turbinenseitige Deckschicht 37 einen geringeren Wärmeausdehnungskoeffizienten als die verdichterseitige Deckschicht 38 aufweist.

Aufgrund der bei Vollast des Turboladers 1 herrschenden hohen Temperaturen im Radrückraum 16 dehnt sich die verdichterseitige Deckschicht 38 stärker als die turbinenseitige Deckschicht 37 aus, so dass die Öffnung des Entlüftungskanals 22 zusätzlich unterstützt wird. Dagegen herrschen im Radrückraum 16 bei Teillast geringere Temperaturen, wodurch die Biegefeder 30 aufgrund des grösseren Wärmeausdehnungskoeffizienten der verdichterseitige Deckschicht 38 in ihre Ausgangslage zurückgeht und damit der Entlüftungskanal 22 verschlossen wird. Die beiden Bewegungsrichtungen der Biegefeder 30 sind durch einen Doppelpfeil dargestellt. Aufgrund dieses Bimetall-Effektes wird ein Verklemmen der Biegefeder 30 verhindert und somit ein zuverlässiges Schliessen bzw. Öffnen des Entlüftungskanals 22 gewährleistet. Zudem kann durch den mehrschichtigen Aufbau der Biegefeder 30 eine eventuelle Flatterneigung verringert und mit Hilfe der Dichtlippe 40 die Abdichtung des Entlüftungskanals 22 verbessert werden.

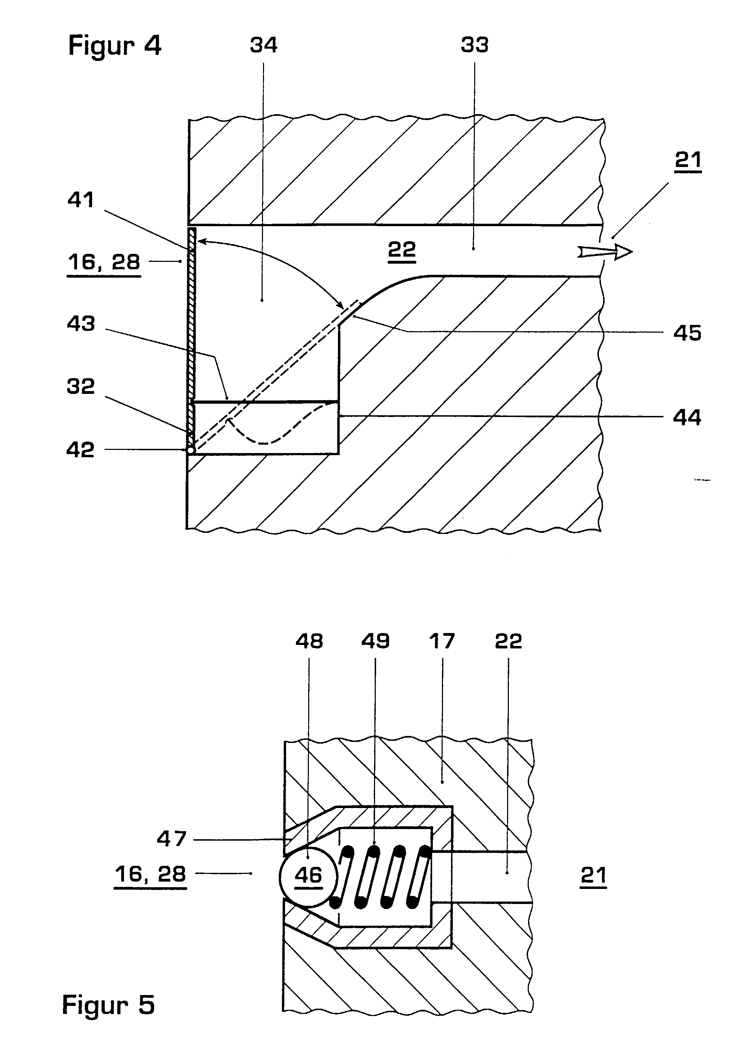

In einem zweiten Ausführungsbeispiel der Erfindung ist eine den gesamten Querschnitt des Entlüftungskanals 22 abdeckende Schliessklappe 41 als Schliesselement ausgebildet (Fig. 4). Die Schliessklappe 41 ist an ihrem am zweiten Kanalteil 34 befestigten Plattenende 32 mit einem Gelenk 42 versehen. Zudem ist die Schliessklappe 41 über ein als Knickstab 43 ausgebildetes Federelement mit einer nichtlinearen Federkennlinie, mit einer turbinenseitigen Seitenwand 44 des zweiten Kanalteils 34 verbunden. Am Entlüftungskanal 22 ist ein Anschlag 45 für die Schliessklappe 41 angeordnet.

Die nach der Eulerschen Knicktheorie ausgelegte Verbindung von Schliessklappe 41 und Knickstab 43 erfolgt so, dass die Schliessklappe 41 bei Überschreiten der kritischen Knicklast schlagartig öffnet und den Entlüftungskanal 22 freigibt. Dabei verhindert der Anschlag 45 ein Überdehnen des Knickstabes 43, so dass dieser lediglich elastisch verformt wird. Die beiden Bewegungsrichtungen der Schliessklappe 41 sind wiederum durch einen Doppelpfeil dargestellt. Natürlich kann statt des Knickstabes 43 auch ein anderes Federelement, beispielsweise eine Schraubenfeder, verwendet werden (nicht dargestellt).

Gemäss einem dritten Ausführungsbeispiel ist ein im Entlüftungskanal 22 angeordnetes Rückschlagventil 46 als Schliesselement ausgebildet. Das Rückschlagventil 46 ist direkt an der Mündung des Entlüftungskanals 22 in den Zwischenraum 28 angeordnet. Es besteht aus einer Befestigungshülse 47, einer Ventilkugel 48 sowie einer Druckfeder 49 (Fig. 5). Das Rückschlagventil 46 öffnet bei hohem Druck im Radrückraum 16, d.h. bei Vollast des Turboladers 1, indem die Ventilkugel 48 gegen die Kraft der Druckfeder 49 in Richtung des Turbinenaustrittes 21 verschoben wird. Sinkt dagegen die Leistung des Turboladers 1 wird die Ventilkugel 48 von der Druckfeder 49 in Richtung ihrer Ausgangslage verschoben, bis das Rückschlagventil 46 wieder schliesst.

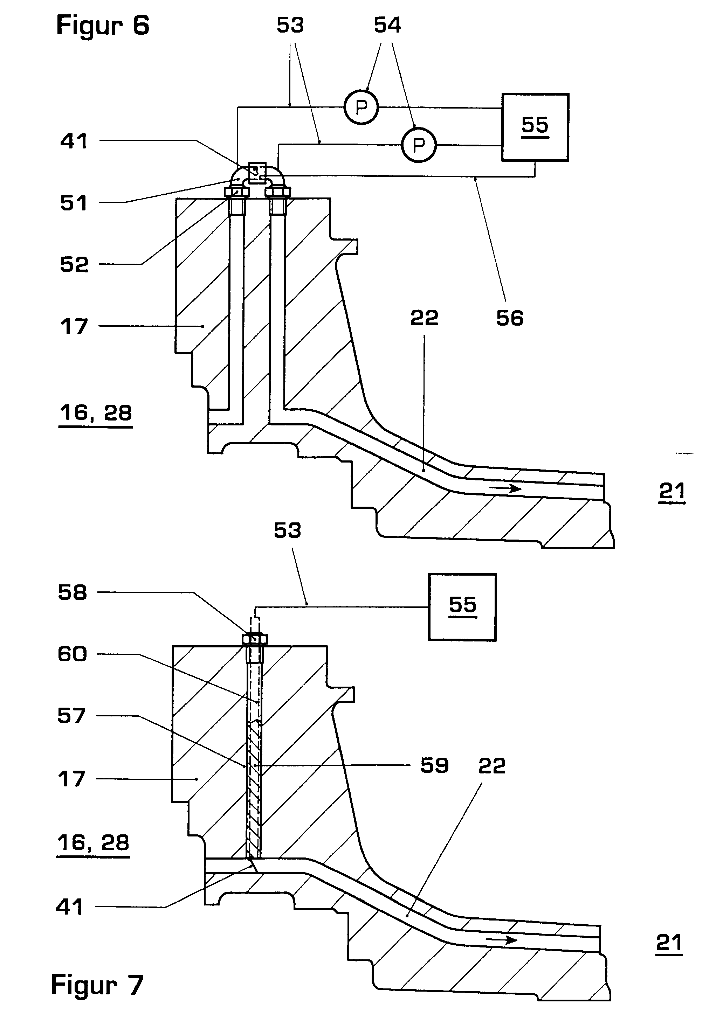

Entsprechend einem weiteren Ausführungsbeispiel der Erfindung ist der Entlüftungskanal 22 zwischen dem Radrückraum 16 des Radialverdichters 3 und dem Bereich 21 des Turboladers 1, der einen geringeren Druck als der Radrückraum 16 aufweist, als ein Teilkanal 51 aus dem Lagergehäuse 17 des Turboladers 1 herausgeführt, wobei die Schliessklappe 41 in dem Teilkanal 51 angeordnet ist. Der ausserhalb des Lagergehäuses 17 angeordnete Teilkanal 51 ist mittels Einschraubstutzen 52 lösbar mit dem Lagergehäuse 17 sowie dem Entlüftungskanal 22 verbunden (Fig. 6). Dadurch kann der Teilkanal 51 von aussen gelöst werden, so dass die Schliessklappe 41 relativ leicht zugänglich ist. Somit muss bei einer Störung nicht der gesamte Turbolader 1 demontiert und der mit diesem verbundene Motor ausser Betrieb gesetzt werden.

Am Teilkanal 51 greift sowohl stromauf als auch stromab der Schliessklappe 41 eine Messleitung 53 mit jeweils einem Druckmessgerät 54 an. Beide Messleitungen 53 sind über eine Mess- und Auswerteeinheit 55 mit einer Betätigungsleitung 56 für die Schliessklappe 41 verbunden, so dass letztere vorteilhaft auch von extern gesteuert werden kann. Natürlich kann hier auch ein anderes Schliesselement, wie beispielsweise das in Fig. 5 dargestellte Rückschlagventil 46 oder die in Fig. 2 gezeigte Biegefeder 30 eingesetzt werden.

Alternativ dazu ist gemäss einem nächsten Ausführungsbeispiel im Lagergehäuse 17 des Turboladers 1 eine von aussen bis zum Entlüftungskanal 22 reichende Bohrung 57 ausgebildet. Diese Bohrung 57 nimmt ein Schraubelement 58, mit einem ebenfalls bis zum Entlüftungskanal 22 reichenden, die Schliessklappe 41 tragenden Bolzen 59 auf (Fig. 7). Damit wird von aussen vorteilhaft eine gute Zugänglichkeit zur Schliessklappe 41 erreicht. Letztere kann nunmehr komplett aus dem Entlüftungskanal 22 entfernt und separat gewartet werden. Zudem weist das Schraubelement 58 eine bis zum Entlüftungskanal 22 reichende Druckmessbohrung 60 auf, welche an ihrem anderen Ende wiederum über eine Messleitung 53 mit der Mess- und Auswerteeinheit 55 verbunden ist. Auf diese Weise ist eine einfache Überwachung der Schubentlastung möglich.

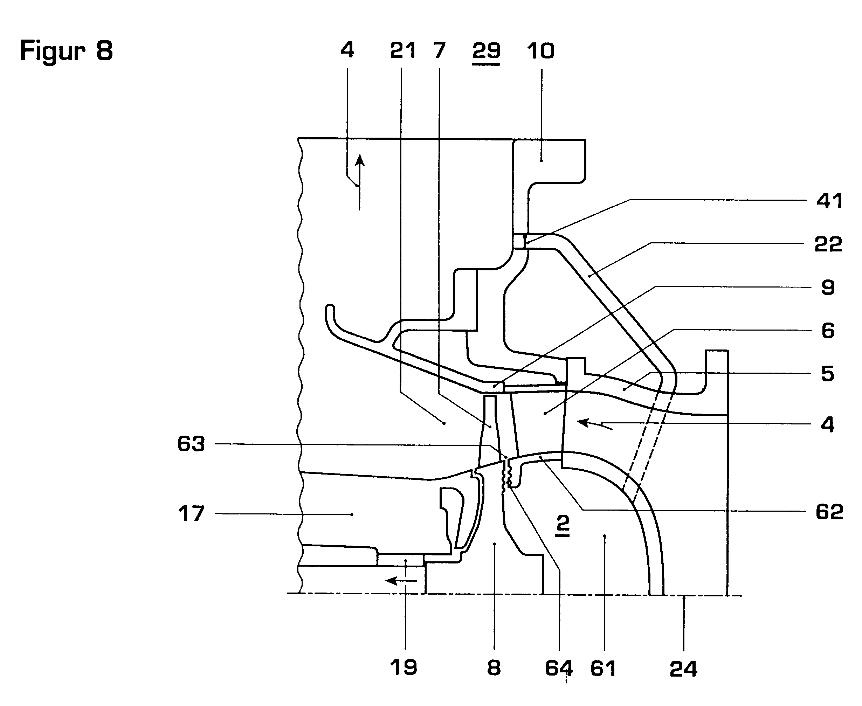

Mit gleicher Wirkung wie bei der bisher beschriebenen, verdichterseitigen Anordnung ist der Entlüftungskanal 22 in einem weiteren Ausführungsbeispiel zwischen einem stromauf des Turbinenrades 8 befindlichen und als Zwischenraum 61 ausgebildeten Hochdruckbereich und dem Turbinenaustritt 21, d.h. einem Bereich des Turboladers 1, welcher einen geringeren Druck aufweist, als der im Zwischenraum 61 herrschende Abgasdruck, angeordnet. Zwischen dem im Betrieb rotierenden Turbinenrad 8 und dem feststehenden Innenring 62 des Düsenrings 6 ist ein vorwiegend radial zur Maschinenachse 24 angeordneter Trennspalt 63 ausgebildet. Letzterer nimmt eine Labyrinthdichtung 64 auf, welche den Leckage-Abgasstrom trotz des hohen Druckgefälles begrenzt. Stromab der Labyrinthdichtung 64 schliesst der Zwischenraum 61 an, der seinerseits über den Entlüftungskanal 22 mit dem Turbinenaustritt 21 kommuniziert, wobei letzterer schliesslich in den Aussenraum 29 mündet (Fig.8). Das wiederum als Schliessklappe 41 ausgebildete Schliesselement ist im Bereich des Gasaustrittgehäuses 10 im Entlüftungskanal 22 angeordnet.

Natürlich kann der Entlüftungskanal auch im Inneren einer der feststehenden Schaufeln des Düsenrings 6 angeordnet sein (nicht dargestellt). Ebenfalls kann sowohl verdichter- als auch turbinenseitig ein Entlüftungskanal angeordnet und mit jeweils einem Schliesselement versehen sein (gleichfalls nicht dargestellt).

### Bezugszeichenliste

- 1: Turbolader
- 2: Turbine
- 3: Radialverdichter
- 4: Abgas
- 5: Gaseintrittgehäuse
- 6: Düsenring
- 7: Laufschaufel
- 8: Turbinenrad
- 9: Abdeckring, Diffusor
- 10: Gasaustrittgehäuse
- 11: Verdichterrad
- 12: Welle
- 13: Luft
- 14: Verdichtergehäuse
- 15: Kanal
- 16: Hochdruckbereich, Radrückraum
- 17: Gehäuse, Lagergehäuse
- 18: Radiallager
- 19: Radiallager
- 20: Axiallagerung
- 21: Bereich des Turboladers mit einem geringeren Druck, Turbinenaustritt
- 22: Entlüftungskanal
- 23: Zwischenwand, Stator
- 24: Maschinenachse
- 25: Trennspalt
- 26: Labyrinthdichtung
- 27: Ausnehmung
- 28: Zwischenraum
- 29: Bereich des Turboladers mit einem geringeren Druck, Aussenraum
- 30: Biegefeder, Schliesselement
- 31: Plattenende, freies
- 32: Plattenende, befestigt
- 33: erster Kanalteil
- 34: zweiter Kanalteil
- 35: Permanentmagnet
- 36: Anschlag
- 37: Deckschicht, turbinenseitig
- 38: Deckschicht, verdichterseitig
- 39: Zwischenschicht
- 40: Dichtlippe
- 41: Schliessklappe, Schliesselement
- 42: Gelenk
- 43: Knickstab, Federelement
- 44: turbinenseitige Seitenwand, von 34
- 45: Anschlag
- 46: Rückschlagventil, Schliesselement
- 47: Befestigungshülse
- 48: Ventilkugel
- 49: Druckfeder
- 51: Teilkanal
- 52: Einschraubstutzen
- 53: Messleitung
- 54: Druckmessgerät
- 55: Mess- und Auswerteeinheit
- 56: Betätigungsleitung
- 57: Bohrung
- 58: Schraubelement
- 59: Bolzen
- 60: Druckmessbohrung
- 61: Hochdruckbereich, Zwischenraum
- 62: Innenring
- 63: Trennspalt
- 64: Labyrinthdichtung
- d1: Querschnitt von 24
- d2: Querschnitt von 25

## Patentansprüche

1. Verfahren zur Schubentlastung eines mit einem Radialverdichter (3) und einer Turbine (2) ausgestatteten Turboladers (1), bei welchem ein Hochdruckbereich (16, 61) des Turboladers (1) mit einem Bereich (21, 29) des Turboladers (1) verbunden ist, welcher einen geringeren Druck als der Hochdruckbereich (16, 61) aufweist, dadurch gekennzeichnet, dass diese Verbindung bei Vollast des Turboladers (1) vollständig geöffnet, bei Teillast zumindest nahezu und im Leerlauf vollständig geschlossen wird.

2. Verfahren nach Anspruch 1, dadurch gekennzeichnet, dass das Öffnen und Schliessen dieser Verbindung selbsttätig erfolgt.

3. Verfahren nach Anspruch 1, dadurch gekennzeichnet, dass das Öffnen und Schliessen dieser Verbindung fremdbetätigt erfolgt.

4. Verfahren nach Anspruch 2 oder 3, dadurch gekennzeichnet, dass das Öffnen und Schliessen dieser Verbindung in Abhängigkeit vom im Hochdruckbereich (16, 61) herrschenden Druck erfolgt.

5. Vorrichtung zur Durchführung des Verfahrens nach einem der Ansprüche 1 bis 4, dadurch gekennzeichnet, dass die Vorrichtung zur Schubentlastung mit einem Schliesselement (30, 41, 46) versehen ist.

6. Vorrichtung nach Anspruch 5, dadurch gekennzeichnet, dass die Vorrichtung zur Schubentlastung als ein zumindest teilweise in einem Gehäuse (17) des Turboladers (1) angeordneter Entlüftungskanal (22) und das Schliesselement (30, 41, 46) im Bereich des Entlüftungskanals (22) ausgebildet ist.

7. Vorrichtung nach Anspruch 6, dadurch gekennzeichnet, dass das Schliesselement (30, 41, 46) im Entlüftungskanal (22) angeordnet ist.

8. Vorrichtung nach Anspruch 6 oder 7, dadurch gekennzeichnet, dass der Entlüftungskanal (22) zwischen einem stromab des Radialverdichters (3) befindlichen Radrückraum (16) und einem Bereich (21, 29) des Turboladers (1) angeordnet ist, der einen geringeren Druck als der Radrückraum (16) aufweist, wobei das Schliesselement (30, 41, 46) eine Temperaturbeständigkeit von zumindest 200 °C besitzt.

9. Vorrichtung nach Anspruch 6 oder 7, dadurch gekennzeichnet, dass der Entlüftungskanal (22) zwischen einem stromauf der Turbine (2) befindlichen Hochdruckbereich (61) und einem stromab der Turbine (2) ausgebildeten Bereich (21) geringeren Druckes angeordnet ist, wobei das Schliesselement (30, 41, 46) eine Temperaturbeständigkeit von zumindest 700°C besitzt.

10. Vorrichtung nach Anspruch 8 oder 9, dadurch gekennzeichnet, dass das Schliesselement (30, 41, 46) plattenförmig, mit einem ersten, freien Plattenende (31) sowie mit einem am Entlüftungskanal (22) befestigten, zweiten Plattenende (32) ausgebildet ist.

11. Vorrichtung nach Anspruch 10, dadurch gekennzeichnet, dass eine den Entlüftungskanal (22) vollständig abdeckende Biegefeder als Schliesselement als (30) ausgebildet ist.

12. Vorrichtung nach Anspruch 11, dadurch gekennzeichnet, dass im zweiten Kanalteil (34), verdichterseitig des freien Plattenendes (31) des Schliesselementes (30) ein Anschlag (36) und turbinenseitig ein Permanentmagnet (35) angeordnet sind.

13. Vorrichtung nach Anspruch 11 oder 12, dadurch gekennzeichnet, dass das Schliesselement (30) aus zwei Deckschichten (37, 38) sowie einer Zwischenschicht (39) besteht und die Zwischenschicht (39) mit einer die Deckschichten (37, 38) am freien Plattenende (31) überragenden Dichtlippe (40) ausgestattet ist.

14. Vorrichtung nach Anspruch 13, dadurch gekennzeichnet, dass zumindest eine der Deckschichten (37, 38) aus einem metallischen Werkstoff und die Zwischenschicht (39) aus einem Kunststoff besteht.

15. Vorrichtung nach Anspruch 14, dadurch gekennzeichnet, dass beide Deckschichten (37, 38) aus metallischen Werkstoffen mit unterschiedlichen Wärmeausdehnungskoeffizienten bestehen.

16. Vorrichtung nach Anspruch 10, dadurch gekennzeichnet, dass eine den Entlüftungskanal (22) vollständig abdeckende Schliessklappe als Schliesselement (41) ausgebildet ist, welche an ihrem am Entlüftungskanal (22) befestigten Plattenende (32) mit einem Gelenk (42) versehen und zudem über ein eine nicht lineare Federkennlinie aufweisendes Federelement (43) mit dem Entlüftungskanal (22) verbunden ist.

17. Vorrichtung nach einem der Ansprüche 6 bis 16, dadurch gekennzeichnet, dass der Entlüftungskanal (22) einen ersten Kanalteil (33) mit einem ersten Querschnitt (d1) und verdichterseitig des ersten Kanalteils (33) einen zweiten Kanalteil (34) mit einem gegenüber dem ersten Querschnitt (dl ) vergrösserten zweiten Querschnitt (d2) aufweist, dass das Schliesselement (30, 41, 46) im zweiten Kanalteil (34) angeordnet und mit seinem einem Plattenende (32) am zweiten Kanalteil (34) befestigt ist.

18. Vorrichtung nach Anspruch 8 oder 9, dadurch gekennzeichnet, dass ein Rückschlagventil als Schliesselement (46) ausgebildet ist.

19. Vorrichtung nach einem der Ansprüche 6 bis 18, dadurch gekennzeichnet, dass der Entlüftungskanal (22) als ein Teilkanal (51) aus dem Gehäuse (17) des Turboladers (1) herausgeführt und das Schliesselement (30, 41, 46) in dem Teilkanal (51) angeordnet ist.

20. Vorrichtung nach Anspruch 19, dadurch gekennzeichnet, dass der ausserhalb des Gehäuses (17) angeordnete Teilkanal (51) lösbar mit dem Gehäuse (17) und/oder dem Entlüftungskanal (22) verbunden ist.

21. Vorrichtung nach Anspruch 19 oder 20, dadurch gekennzeichnet, dass am Teilkanal (51), stromauf und stromab des Schliesselementes (30, 41, 46), jeweils eine Messleitung (53) anschliesst, jede Messleitung (53) ein Druckmessgerät (54) aufweist und mit einer Mess- und Auswerteeinheit (55) verbunden ist, wobei letztere ihrerseits mit einer Betätigungsleitung (56) für das Schliesselement (30, 41, 46) verbunden ist.

22. Vorrichtung nach einem der Ansprüche 6 bis 18, dadurch gekennzeichnet, dass im Gehäuse (17) des Turboladers (1) eine von aussen bis zum Entlüftungskanal (22) reichende Bohrung (57) ausgebildet ist, dass die Bohrung (57) ein Schraubelement (58), mit einem ebenfalls bis zum Entlüftungskanal (22) reichenden, das Schliesselement (30, 41, 46) tragenden Bolzen (59) aufnimmt.

23. Vorrichtung nach Anspruch 22, dadurch gekennzeichnet, dass das Schraubelement (58) zumindest eine bis zum Entlüftungskanal (22) reichende Druckmessbohrung (60) aufweist, welche an ihrem anderen Ende mit einer Mess- und Auswerteeinheit (55) verbunden ist.
